# EUROPÄISCHE PATENTANMELDUNG

(11) **EP 4 108 089 A1**
(43) Veröffentlichungstag der Anmeldung: **28.12.2022**
(21) Anmeldenummer: 21181169.0
(22) Anmeldetag: 23.06.2021
(51) Int. Cl.: A22C 25/16

(54) **VORRICHTUNG ZUM FREISCHNEIDEN DER FLANKENGRÄTEN VON GEKÖPFTEN, GESCHLACHTETEN UND VORZUGSWEISE IN IHRER BAUCHHÖHLE GEÖFFNETEN FISCHEN SOWIE VERFAHREN UND FILETIERMASCHINE ZUM FILETIEREN GEKÖPFTER, GESCHLACHTETER UND VORZUGSWEISE IN IHRER BAUCHHÖHLE GEÖFFNETER FISCHE INSBESONDERE MIT EINER SOLCHEN VORRICHTUNG**

(71) Anmelder: NORDISCHER MASCHINENBAU RUD. BAADER GMBH + CO KG, 23560 Lübeck (DE)
(72) Erfinder: RÜDIGER, Tim, 23560 Lübeck (DE); WITTICH, Eugen, 23560 Lübeck (DE); SCHRÖDER, Matthias, 23560 Lübeck (DE)
(74) Vertreter: Stork Bamberger Patentanwälte PartmbB

(57) **Zusammenfassung**

Die Erfindung betrifft eine Vorrichtung (10), ausgebildet und eingerichtet zum Freischneiden von Flankengräten (11) von geköpften, geschlachteten und vorzugsweise in ihrer Bauchhöhle geöffneten Fischen (12), die mit ihrer Hauptgräte (13) auf Transportsätteln (14) aufliegend Schwanz voraus in Transportrichtung T transportiert werden, mindestens umfassend eine obere Grätenführung (15), die zum Führen der Hauptgräte (13) von der dorsalen Seite des zu bearbeitenden Fisches (12) ausgebildet und eingerichtet ist, eine untere Grätenführung (16), die zum Führen von im Bereich vom Schwanz bis zur Bauchhöhle ausgebildeten, ventralen Speichen (44) des zu bearbeitenden Fisches (12) ausgebildet und eingerichtet ist, sowie ein Trennaggregat (17) zum Lösen von Fischfilets von den die Bauchhöhle des zu bearbeitenden Fisches (12) umgebenden Flankengräten (11), wobei das Trennaggregat (17) ein Trennmittel (18) mit korrespondierender Gegenlage (19) umfasst und aus einer Warteposition in eine Arbeitsposition und umgekehrt bringbar ist, wobei sich diese Vorrichtung (10) dadurch auszeichnet, dass im Bereich der oberen Grätenführung (15) eine Löseeinrichtung (20) angeordnet ist, die mindestens zum Anlösen der Grätenverbindung (21) zwischen Flankengräten (11) und Hauptgräte (13) von mindestens einigen der Flankengräten (11) ausgebildet und eingerichtet ist. Des Weiteren betrifft die Erfindung eine entsprechende Filetiermaschine (40) mit einer solchen Vorrichtung (10) sowie ein entsprechendes Verfahren.

## Beschreibung

Die Erfindung betrifft eine Vorrichtung, ausgebildet und eingerichtet zum Freischneiden von Flankengräten von geköpften, geschlachteten und vorzugsweise in ihrer Bauchhöhle geöffneten Fischen, die mit ihrer Hauptgräte auf Transportsätteln aufliegend Schwanz voraus in Transportrichtung T transportiert werden, mindestens umfassend eine obere Grätenführung, die zum Führen der Hauptgräte von der dorsalen Seite des zu bearbeitenden Fisches ausgebildet und eingerichtet ist, eine untere Grätenführung, die zum Führen von im Bereich vom Schwanz bis zur Bauchhöhle ausgebildeten, ventralen Speichen des zu bearbeitenden Fisches ausgebildet und eingerichtet ist, sowie ein Trennaggregat zum Lösen von Fischfilets von den die Bauchhöhle des zu bearbeitenden Fisches umgebenden Flankengräten, wobei das Trennaggregat ein Trennmittel mit korrespondierender Gegenlage umfasst und aus einer Warteposition in eine Arbeitsposition und umgekehrt bringbar ist.

Die Erfindung befasst sich weiterhin mit einer Filetiermaschine zum Filetieren geköpfter, geschlachteter und vorzugsweise in ihrer Bauchhöhle geöffneter Fische, umfassend Rückenmesser zum Freilegen von dorsalen Speichen bis an die Hauptgräte heran, Bauchmesser zum Freilegen von sich vom Schwanz bis zur Bauchhöhle erstreckenden ventralen Speichen bis an die Hauptgräte heran, eine Vorrichtung zum Freischneiden von Flankengräten, Trennmesser zum Trennen der Filets im Schwanzbereich von der Hauptgräte unter Durchschneiden des von Bauch- und Rückenmessern um die Hauptgräte belassenen Steges, einen endlosen Förderer zum Transport der Fische Schwanz voraus sowie eine Anzahl auf dem Förderer angeordneter Fischsättel zur sicheren Aufnahme der Fische in ihrer Bauchhöhle.

Des Weiteren betrifft die Erfindung ein Verfahren zum Filetieren geköpfter, geschlachteter und vorzugsweise in ihrer Bauchhöhle geöffneter Fische, umfassend die Schritte: Transportieren der zu bearbeitenden Fische Schwanz voraus in Transportrichtung T durch eine Filetiermaschine, Freischneiden der dorsalen Speichen bis an die Hauptgräte heran, Freischneiden der ventralen Speichen bis an die Hauptgräte heran, Freischneiden der Flankengräten, und Trennen der Filets im Schwanzbereich von der Hauptgräte, indem der beim Freischneiden der dorsalen und ventralen Speichen um die Hauptgräte herum belassene Steg durchtrennt wird.

Solche Vorrichtungen und Filetiermaschinen sowie Verfahren kommen in der fischverarbeitenden Industrie zum Einsatz, um Fische, insbesondere der Spezies Lachs, Weißfisch und anderer Spezies, automatisch zu filetieren. Die Anatomie und insbesondere der Aufbau des Grätengerüstes variieren jedoch von Spezies zu Spezies. Gemeinsam ist den Fischen eine zentrale Hauptgräte (im Folgenden auch als Mittelgräte oder Wirbelsäule bezeichnet). Zum Rücken hin erstrecken sich entlang der Hauptgräte nach oben im Wesentlichen vertikal ausgerichtete dorsale Speichen, die auch als Rückenspeichen bezeichnet werden. Vom Schwanzbereich bis zum Beginn der Bauchhöhle erstrecken sich nach unten im Wesentlichen vertikal ausgerichtete ventrale Speichen, die auch als Bauchspeichen bezeichnet werden. Unterschiedlich sind häufig der Verlauf der Flankengräten und deren Ausbildung, die entlang der Hauptgräte im Bereich der Bauchhöhle zu beiden Seiten der Bauchhöhle ausgebildet sind. Während sich die Flankengräten z.B. beim Weißfisch ausgehend von der Mittelgräte schräg und im Wesentlichen linear oder nur mit einem leichten Bogen nach unten um die Bauchhöhle herum erstrecken, sind die Flankengräten z.B. beim Wolfsbarsch stärker gekrümmt. Am Beispiel der Spezies Wolfsbarsch erstrecken sich die Flankengräten insbesondere bei den am kopfseitigen Ende der Bauchhöhe befindlichen Flankengräten zunächst im Wesentlichen horizontal von der Hauptgräte, um sich dann in einem größeren Bogen nach unten um die Bauchhöhe herum zu erstrecken. Im Übrigen sind die Flankengräten z.B. beim Wolfsbarsch kräftiger und dicker ausgebildet, insbesondere die in Richtung des kopfseitigen Endes der Bauchhöhle befindlichen Flankengräten. Mit anderen Worten unterscheiden sich die Spezies in Form bzw. Ausrichtung sowie Stabilität der Flankengräten.

Ein wesentlicher Arbeitsschritt bei der automatisierten Filetierung der Fische ist das Lösen der Filets von den Flankengräten, also den so genannten Rippenbögen, die sich zu beiden Seiten der Hauptgräte erstrecken und die Bauchhöhle des Fisches umgeben. Dabei werden die Fische mittels der Transportsättel zu den einzelnen Bearbeitungswerkzeugen, u.a. auch der Vorrichtung zum Freischneiden der Flankengräten, transportiert. Die oberen und unteren Grätenführungen dienen dazu, den Fisch in der optimalen Bearbeitungsposition auf dem Transportsattel zu halten bzw. zu führen. Das Trennaggregat ist üblicherweise zu beiden Seiten des zu bearbeitenden Fisches angeordnet, so dass die Filets parallel oder zeitversetzt von den Flankengräten gelöst werden können. Durch das Trennmittel und die Gegenlage ist ein Schneidspalt definiert. Beim Freischneiden von Flankengräten, die keine so ausgeprägte Bogenstruktur aufweisen, die Flankengräten also wie z.B. bei der Spezies Weißfisch eher linear/flach in der Ebene der durch die von dem Trennmittel bzw. der Gegenlage aufgespannten Ebene liegen, können die Flankengräten durch das Trennmittel und eine am Trennmittel vorgesehen Fase in den Schneidspalt geleitet werden.

Beim Wolfsbarsch und vergleichbaren Spezies ist die Bogenstruktur der Flankengräten, also die Rippenbogenstruktur, besonders ausgeprägt. Das bedeutet, dass die Flankengräten eine stärkere Krümmung aufweisen und einen größeren Bogen beschreiben. Auch weisen die Flankengräten eine besondere Stabilität auf, insbesondere bei den Flankengräten, die sich am kopfseitigen Ende der Bauchhöhle von der Hauptgräte erstrecken. Mit zunehmender Krümmung und Stabilität der Flankengräten wird der Prozess des Freischneidens der Flankengräten unsicherer. Da die Flankengräten mindestens teilweise nicht durch den zwischen dem Trennmittel und der Gegenlage gebildeten Schneidspalt passen, besteht die Gefahr des Einschneidens der Flankengräten, mit dem Ergebnis, dass die Flankengräten ganz oder teilweise am Filet verbleiben, wodurch der nachträgliche Trimmaufwand, also insbesondere das Entfernen von Flankengräten oder Teilen davon, deutlich erhöht ist.

Es ist daher Aufgabe der vorliegenden Erfindung, eine Vorrichtung zum Freischneiden der Flankengräten von Fischen vorzuschlagen, die das automatisierte Filetieren insbesondere auch bei Spezies mit einer ausgeprägten Rippenbogenstruktur, wie z.B. beim Wolfsbarsch, optimiert. Des Weiteren ist es Aufgabe der Erfindung, eine entsprechende Filetiermaschine sowie ein entsprechendes Verfahren vorzuschlagen.

Diese Aufgabe wird durch eine Vorrichtung mit den eingangs genannten Merkmalen dadurch gelöst, dass im Bereich der oberen Grätenführung eine Löseeinrichtung angeordnet ist, die mindestens zum Anlösen der Grätenverbindung zwischen Flankengräten und Hauptgräte von mindestens einigen der Flankengräten ausgebildet und eingerichtet ist. Mittels der erfindungsgemäßen Löseeinrichtung besteht erstmals die Möglichkeit, in den Verbindungsbereich der Flankengräte zur Hauptgräte eine vorzugsweise punktuelle Last einwirken zu lassen, um die Flankengräten zumindest anzubrechen. Unter der Formulierung "mindestens zum Anlösen" ist nämlich bereits das Anbrechen der festen Grätenverbindung zwischen einer Flankengräte und der Hauptgräte bzw. einem Wirbelkörper zu verstehen, ohne dass die Flankengräte vollständig und mit allen Restverbindungen von der Hauptgräte gelöst ist. Selbst wenn noch eine Restverbindung zwischen der Flankengräte und der Hauptgräte existiert, z.B. in Form von restlichen Verbindungen von Grätenmaterial und/oder anderem Verbindungsmaterial, z.B. Gewebe, ist der Widerstand der zumindest angebrochenen/angeknackten Flankengräten mindestens teilweise gebrochen, so dass sich die Flankengräte in eine für den weiteren Filetiervorgang geeignete Position bringen lässt, insbesondere in den bzw. durch den Schneidspalt zwischen Trennmittel und Gegenlage leiten lässt. Das Anlösen schließt das vollständige Lösen, also Trennen, nicht aus. Die Formulierung "mindestens einigen der Flankengräten" bringt zum Ausdruck, dass nicht zwingend alle Flankengräten teilweise oder vollständig angelöst werden müssen, aber angelöst oder vollständig gelöst werden können. Die erfindungsgemäße Vorrichtung ermöglicht auf automatische und besonders effektive Weise, dass die Flankengräten mindestens teilweise durch das Anlösen der Flankengräten und das Leiten der angelösten Flankengräten in eine für das Freischneiden der Flankengräten geeignete Zwangslage bringbar sind und auch gebracht werden, in der sie in und durch den Schneidspalt geleitet werden. Das führt dazu, dass die von den Flankengräten freigeschnittenen Filets frei von Flankengräten und/oder deren Rückständen sind, so dass mögliche Nacharbeit in Form des Trimmens der freigeschnittenen Filets signifikant reduziert werden kann.

Vorteilhafterweise ist die Löseeinrichtung mindestens zum Anlösen der Grätenverbindung zwischen Flankengräten und Hauptgräte mindestens von den in Richtung des Kopfbereichs, also am kopfseitigen Ende der Bauchhöhle des zu bearbeitenden Fisches, befindlichen Flankengräten zu beiden Seiten der Hauptgräte ausgebildet und eingerichtet. Die Flankengräten werden in Richtung des kopfseitigen Endes immer stärker und fester in ihrer Verbindung zur Hauptgräte und auch bezüglich ihrer Krümmung ausgeprägter. Die Löseeinrichtung ist entsprechend ausgebildet und eingerichtet, insbesondere mit diesen besonders weit außerhalb der durch das Trennmittel bzw. der Gegenlage definierten Ebene, in der auch der Schneidspalt liegt, liegenden, da besonders stark gekrümmten Flankengräten, in Zwangskontakt zu kommen, um diese zumindest anzubrechen und in den zwischen Trennmittel und Gegenlage gebildeten Schneidspalt zu leiten.

Eine besonders bevorzugte Ausführungsform ist dadurch gekennzeichnet, dass die Löseeinrichtung mindestens zwei Löseelemente umfasst, die auf einander gegenüberliegenden Seiten der oberen Grätenführung positioniert bzw. angeordnet sind. Die Löseelemente stellen eine einfache und dennoch besonders effektive Ausführung dar, um punktuell und zuverlässig eine Lösekraft in den Verbindungsbereich von Flankengräte zur Hauptgräte einzuleiten, um diese mindestens anzulösen. Die Anzahl der Löseelemente sowie deren Positionierung und Anordnung kann variieren, solange ein Zwangskontakt mit der Grätenverbindung herstellbar ist.

Eine vorteilhafte Weiterbildung zeichnet sich dadurch aus, dass jedes Löseelement einen Löseabschnitt und einen Leitabschnitt umfasst. Damit wird auf besonders wirkungsvolle Weise erreicht, dass während des Flankenschnitts, also während des Freischneidens der Flankengräten, die Löseelemente mit ihren Löseabschnitten die Flankengräten zumindest anbrechen, und diese anschließend mit ihren Leitabschnitten in eine bevorzugte Zwangsposition bringen, nämlich gegen die Gegenlage des Trennaggregats drücken. Dadurch wird die zumindest angelöste Flankengräte gestreckt und leicht gedreht, so dass sie in der durch das Trennmittel bzw. die Gegenlage aufgespannten Ebene liegt und unter das Trennmittel und damit durch den Schneidspalt geführt werden kann. Selbst die ursprünglich steifen und stark gewölbten Flankengräten können auf diese Weise unversehrt durch den Schneidspalt geführt werden, so dass die Filets frei von Flankengräten und/oder Rückständen davon gewonnen werden.

Eine besonders bevorzugte Ausführungsform ist dadurch gekennzeichnet, dass der Löseabschnitt dem Leitabschnitt entgegen der Transportrichtung T der zu bearbeitenden Fische vorauslaufend angeordnet ist, derart, dass die anzulösenden Flankengräten erst auf den Löseabschnitt mindestens zum Anlösen der Flankengräten von der Hauptgräte und nachfolgend auf den Leitabschnitt zum Leiten der mindestens angelösten Flankengräten in einen zwischen Trennmittel und Gegenlage des Trennaggregats bestehenden Schneidspalt treffen. Durch diese Ausbildung erfolgt das zwangsläufige Anlösen und Positionieren in die gewünschte Zwangsposition während des Transports der zu bearbeitenden Fische durch die Vorrichtung.

Vorteilhafterweise ist der Löseabschnitt mindestens an einer den Flankengräten zugewandten Lösekante mindestens abschnittsweise scharfkantig ausgebildet, während der Leitabschnitt zur Bildung einer Leitkante mindestens abschnittsweise stumpf ausgebildet ist. Die scharfkantige Lösekante ermöglicht eine punktuelle Krafteinwirkung durch das Löseelement in den Verbindungsbereich zwischen Flankengräte und Hauptgräte, damit dieser zuverlässig zumindest angebrochen wird. Optional sind auch flächige oder linienförmige Krafteinwirkungen realisierbar. Die stumpfe Leitkante stellt wirksam sicher, dass die zumindest angebrochene Flankengräte sicher auf die geneigte Fläche der Gegenlage gedrückt und somit unterhalb des Trennmittels durch den Schneidspalt geleitet wird.

Eine vorteilhafte Weiterbildung ist dadurch gekennzeichnet, dass sich die scharfkantige Lösekante von einer den Flankengräten zugewandten Unterkante bis in den Bereich einer der Transportrichtung T der zu bearbeitenden Fische entgegenweisenden Frontkante erstreckt. Mit dieser Ausbildung und Ausdehnung der Lösekante können zuverlässig alle Flankengräten "aufgenommen" und auf die Unterkante geleitet werden, um das Anlösen auf der Unterkante durch den zunehmenden Anpressdruck zwischen Löseelement und Flankengräte mindestens zum Anlösen zu nutzen.

Vorzugsweise erstreckt sich die stumpfe Leitkante in Verlängerung der scharfkantigen Lösekante auf der den Flankengräten zugewandten Unterkante, wobei die stumpfe Leitkante zusätzlich eine Erstreckung quer zur Transportrichtung T zur Bildung einer Leitfase aufweist. Die Erstreckung der Leitkante in Verlängerung der Lösekante kann kontinuierlich oder mit Versatz erfolgen. Die Leitfase stellt sicher, dass die mindestens angelösten Flankengräten in die geeignete/gewünschte Zwangsposition, nämlich gestreckt und leicht gedreht auf die Gegenlage, gedrückt werden, um die Flankengräten durch den Schneidspalt zu leiten.

Eine besonders bevorzugte Ausführungsform ist dadurch gekennzeichnet, dass die aus der Lösekante und der Leitkante gebildete Unterkante jedes Löseelementes in Transportrichtung T der zu bearbeitenden Fische abfallend ausgebildet ist. Dadurch wird beim Transport der zu bearbeitenden Fische in Transportrichtung T durch die Vorrichtung der Abstand zwischen der Unterkante der Löseelemente und den Flankengräten reduziert, wodurch der Druck der Löseelemente auf die Flankengräten steigt und zum Herstellen eines Zwangskontakts zum sicheren Anlösen/Anbrechen der Flankengräten führt, zumindest der Flankengräten am kopfseitigen Ende der Bauchhöhle des zu bearbeitenden Fisches.

Zweckmäßigerweise ist jedes Löseelement wahlweise einstückig oder mehrteilig ausgebildet, wobei die einstückige Ausbildung aus Hygienegründen bevorzugt ist.

Die Löseelemente können als eigenständige Komponente ausgebildet sein. Diese eigenständige Komponente kann z.B. ortsfest entlang des Transportweges der zu bearbeitenden Fische stehen, derart, dass die zu bearbeitenden Fische zwangsläufig auf die Löseelemente treffen. Die Löseelemente können auch aktiv gesteuert sein, um sie z.B. aus einer Warteposition in eine Arbeitsposition und zurück zu bewegen. Die Löseelemente können dazu einzeln oder synchron angesteuert werden. Besonders bevorzugt sind die Löseelemente bzw. deren Steuerung in Wirkverbindung mit einem Detektionsmittel zum Erkennen fischspezifischer Daten, wie z.B. Größe, Lage und Ausprägung der Flankengräten etc., so dass die Löseelemente individuell steuerbar sind. Besonders vorteilhaft sind die Löseelemente jeweils mit der oberen Grätenführung verbunden, wodurch eine besonders einfache und kompakte Lösung zum zuverlässigen Anlösen der Flankengräte realisiert ist.

Vorteilhafterweise sind die Löseelemente auf der jeweils vom Führungsspalt der oberen Grätenführung abgewandten Seite fest an dieser angebracht. Durch diese Ausbildung besteht die Möglichkeit, zum einen den Verbindungsbereich zwischen Flankengräte und Hauptgräte möglichst nah an der Hauptgräte zu treffen, um ein wirkungsvolles Anlösen/Anbrechen zu erreichen. Zum anderen führt die dichte Anbringung der Löseelemente an der oberen Grätenführung dazu, dass das zu gewinnende Filet beschädigungsfrei bleibt, da eine Kollision der bereits durch die Rückenmesser von den Rückenspeichen gelösten Filets mit den Löseelementen vermieden wird.

Optional ist die Anbringung der Löseelemente an der oberen Grätenführung lösbar ausgebildet. Damit können diese z.B. bei einem Verschleiß schnell und einfach ausgetauscht werden. Bevorzugt sind die Löseelemente jedoch fest und einstückig mit der Grätenführung ausgebildet, was sich positiv auf die Reinigungsmöglichkeit und damit auf die Hygiene auswirkt.

Die Aufgabe wird auch durch eine eingangs erwähnte Filetiermaschine gelöst, die sich dadurch auszeichnet, dass die Vorrichtung zum Freischneiden der Flankengräten nach einem oder mehreren der Ansprüche 1 bis 13 ausgebildet ist. Die sich daraus ergebenden Vorteile wurden bereits im Zusammenhang mit der Vorrichtung zum Freischneiden erwähnt, so dass zur Vermeidung von Wiederholungen an dieser Stelle auf die entsprechenden Passagen verwiesen wird.

Die Aufgabe wird auch durch ein Verfahren mit den eingangs genannten Schritten gelöst, das dadurch gekennzeichnet ist, dass die Flankengräten vor dem Freischneiden mindestens teilweise im Bereich ihrer Grätenverbindung zur Hauptgräte mindestens angelöst werden. Mit dem Anlösen wird die feste Grätenverbindung zwischen Flankengräte und Hauptgräte zumindest angebrochen, wodurch die Grätenverbindung an Stabilität verliert und entsprechend leichter in eine gewünschte Zwangsposition bewegt/geführt werden kann. Mit anderen Worten ermöglicht das erfindungsgemäße Verfahren auch bei Fischspezies mit einer ausgeprägten und stabilen Flankengrätenstruktur, wie sie z.B. der Wolfsbarsch aufweist, dass die Flankengräten - aufgrund des Anlösens - in eine Ebene bewegt/gedreht werden können, in der das Freischneiden der Flankengräten ohne Einschneiden derselben ausgeführt werden kann.

Vorzugsweise werden mindestens die sich in Richtung des Kopfbereiches befindlichen Flankengräten zu beiden Seiten der Hauptgräte angelöst, vorzugsweise mindestens angebrochen. Diese Flankengräten, die sich im kopfseitigen Bereich ausgehend von der Hauptgräte stark gebogen um die Bauchhöhle herum erstrecken und eine große Stabilität aufweisen, werden vor dem eigentlichen Freischneiden angelöst bzw. angebrochen und in eine Lage/Position gebracht, in der sie durch den zum Freischneiden der Flankengräten gebildeten Schneidspalt zwischen Trennmittel und Gegenlage eines Trennaggregats passen.

Vorteilhafterweise wird mindestens zum Anlösen der Grätenverbindung zwischen Flankengräten und Hauptgräte eine vorzugsweise punktuelle Last aufgebracht, um die feste Verbindung zu trennen. Durch die punktuelle Krafteinleitung in den Bereich der Grätenverbindung kann ein zuverlässiges und sicheres Anbrechen oder Durchbrechen der Grätenverbindung sichergestellt werden.

Eine bevorzugte Weiterbildung zeichnet sich dadurch aus, dass die punktuelle Last auf die Grätenverbindung mit Transport der zu bearbeitenden Fische in Transportrichtung T zunimmt. Dadurch wird die Zuverlässigkeit und Effizienz beim Anlösen, Anknacken, Anbrechen und/oder Durchbrechen wesentlich erhöht, insbesondere bei den am kopfseitigen Ende der Bauchhöhle des zu bearbeitenden Fisches befindlichen Flankengräten.

Besonders bevorzugt werden die mindestens angelösten Flankengräten gedreht und in einen zwischen einem Trennmittel und einer Gegenlage eines Trennaggregats zum Freischneiden der Flankengräten gebildeten Schneidspalt geleitet. Durch das Anlösen und die damit gelockerte bzw. aufgehobene starre Grätenverbindung lassen sich die angelösten Flankengräten drücken, beispielsweise bei kontinuierlichem Transport der zu bearbeitenden Fische in Transportrichtung T entgegen der Transportrichtung T, so dass sich die Flankengräten flach quasi zur Seite drehen und sich in der durch das Trennmittel bzw. der Gegenlage aufgespannten Ebene befinden. Mit anderen Worten ist zwischen dem flächigen Trennmittel, beispielsweise einem Kreismesser, und der flächigen Gegenlage, die einteilig oder bevorzugt mehrteilig ausgebildet sein kann, in der Arbeitsposition der Schneidspalt gebildet. Die durch das Trennmittel aufgespannte Ebene liegt im Wesentlichen parallel zu der von der Gegenlage aufgespannten Ebene, nur versetzt um die Größe des Schneidspaltes. Zur Bildung des Schneidspaltes liegt die Ebene des Trennmittels je nach Blickwinkel oberhalb oder unterhalb der Ebene der Gegenlage. Entsprechend werden die Flankengräten genaugenommen auf die Oberfläche der Gegenlage gedreht/gedrückt und in eine Position zwischen die beiden zuvor definierten Ebenen, nämlich in den Schneidspalt 39, geführt, um einen beschädigungsfreien Durchtritt aller Flankengräten 11 durch den Schneidspalt 39 zu gewährleisten.

Besonders bevorzugt wird das Verfahren mit einer Filetiermaschine nach Anspruch 14 ausgeführt. Weitere sich daraus ergebenden Vorteile wurden zuvor ausführlich beschrieben, weshalb zur Vermeidung auf die entsprechenden Passagen verwiesen wird.

Weitere zweckmäßige und/oder vorteilhafte Merkmale und Weiterbildungen zur Vorrichtung und zur Filetiermaschine sowie zu dem entsprechenden Verfahren ergeben sich aus den Unteransprüchen und der Beschreibung. Besonders bevorzugte Ausführungsformen werden anhand der beigefügten Zeichnung näher erläutert. In der Zeichnung zeigt:
- Fig. 1: eine perspektivische Ansicht einer Filetiermaschine mit einer erfindungsgemäßen Vorrichtung zum Freischneiden der Flankengräten,
- Fig. 2: eine vergrößerte Darstellung der erfindungsgemäßen Vorrichtung zum Freischneiden der Flankengräten,
- Fig. 3: eine Schnittansicht durch die Vorrichtung gemäß Figur 2 in Transportrichtung T mit einem Flankenschnitt bei einem Fisch der Spezies Wolfsbarsch, bevor das Löseelement in Kontakt mit den Flankengräten steht,
- Fig. 4: die Ansicht gemäß Figur 3, mit der Löseeinrichtung in Kontakt mit den Flankengräten,
- Fig. 5: eine vergrößerte Darstellung der Löseeinrichtung in perspektivischer Ansicht, bei der die Löseeinrichtung fest an der oberen Grätenführung angeordnet ist,
- Fig. 6: eine weitere Ausführungsform der Löseeinrichtung, die relativ zur oberen Grätenführung ausweichbar ausgebildet ist, und

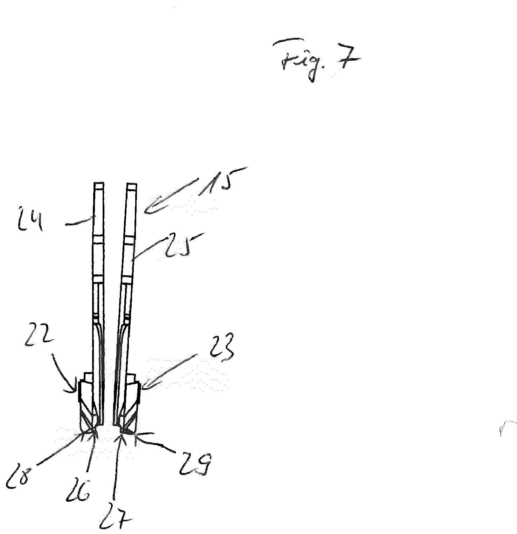

- Fig. 7: die Löseeinrichtung gemäß Figur 5 in Vorderansicht.

Die gezeigte und erfindungsgemäße Vorrichtung dient zum Freischneiden der Flankengräten (im Folgenden auch als Rippenbögen bezeichnet) von geköpften, geschlachteten und vorzugsweise in ihrer Bauchhöhle geöffneten Fischen der Spezies Wolfsbarsch, die in Fischlaufrichtung Schwanz voraus transportiert werden. Die Vorrichtung kann jedoch selbstverständlich auch zum Lösen der Filets von den Rippen anderer Fischspezies eingesetzt werden. Auch ist ein Einsatz bei Fischen, die in Fischlaufrichtung Kopf voraus transportiert werden, möglich. Die Erfindung bezieht sich auch auf Vorrichtungen zum Freischneiden der Flankengräten von geköpften, geschlachteten und noch nicht in ihrer Bauchhöhle geöffneten Fischen.

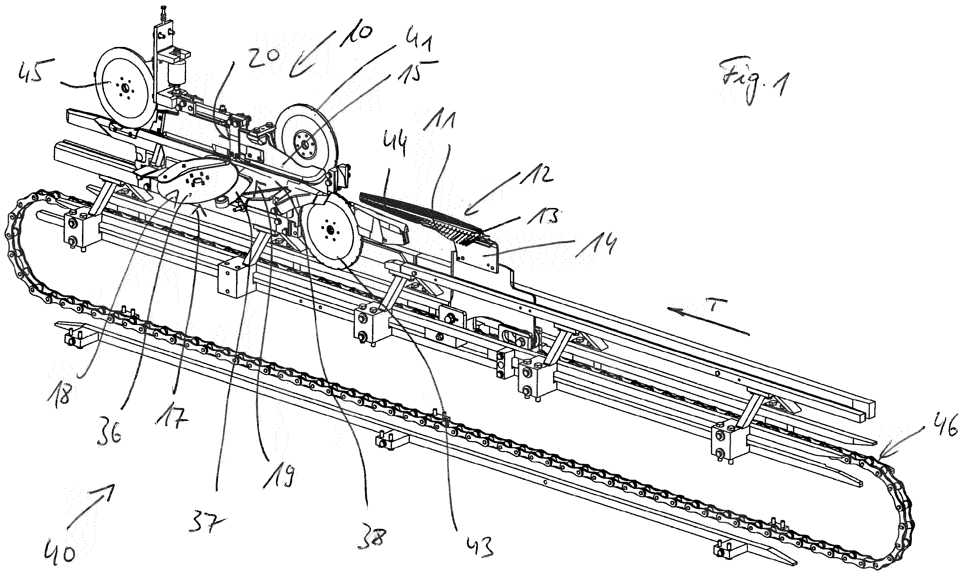

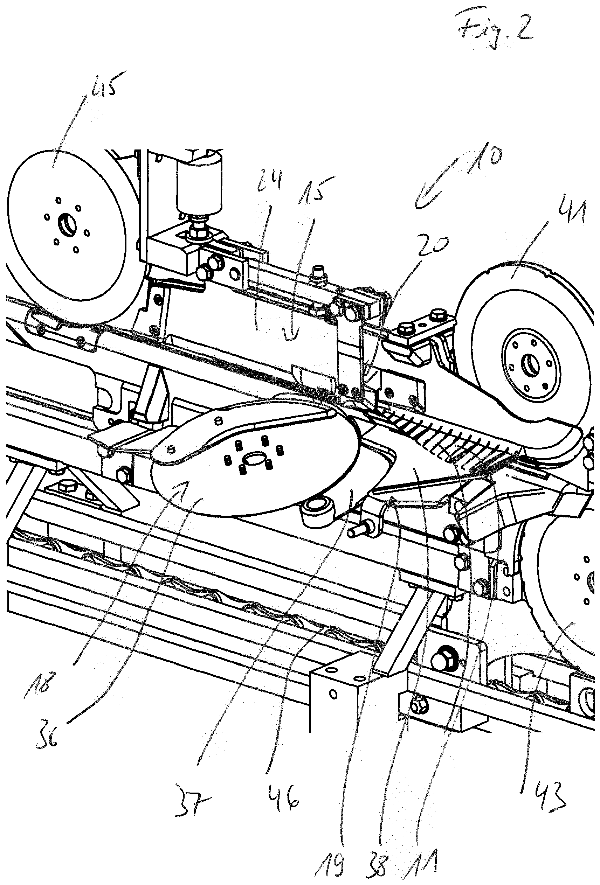

Bei der in den Figuren 1 und 2 dargestellten Vorrichtung 10 zum Freischneiden der Flankengräten 11 wird die Vorrichtung 10 der besseren Übersicht halber nur für die Bearbeitung einer Fischseite dargestellt und beschrieben. In der Praxis befinden sich jedoch zu beiden Seiten eines zu bearbeitenden Fisches 12 die im folgenden beschriebenen Komponenten, so dass die beiden Filets eines Fisches 12 auf beiden Seiten vorzugsweise zeitgleich, optional jedoch auch zeitversetzt, von den Flankengräten 11 gelöst werden können.

Die dargestellte Vorrichtung 10 ist zum Freischneiden von Flankengräten 11 von geköpften, geschlachteten und vorzugsweise in ihrer Bauchhöhle geöffneten Fischen 12 ausgebildet und eingerichtet, die mit ihrer Hauptgräte 13 auf Transportsätteln 14 aufliegend Schwanz voraus in Transportrichtung T transportiert werden. Diese Vorrichtung 10 umfasst mindestens eine obere Grätenführung 15, die zum Führen der Hauptgräte 13 von der dorsalen Seite des zu bearbeitenden Fisches 12 ausgebildet und eingerichtet ist, eine untere Grätenführung 16, die zum Führen von im Bereich vom Schwanz bis zur Bauchhöhle ausgebildeten, ventralen Speichen 44 des zu bearbeitenden Fisches 12 ausgebildet und eingerichtet ist, sowie ein Trennaggregat 17 zum Lösen von Fischfilets von den die Bauchhöhle des zu bearbeitenden Fisches 12 umgebenden Flankengräten 11, wobei das Trennaggregat 17 ein Trennmittel 18 mit korrespondierender Gegenlage 19 umfasst und aus einer Warteposition in eine Arbeitsposition und umgekehrt bringbar ist.

Diese Vorrichtung 10 zeichnet sich erfindungsgemäß dadurch aus, dass im Bereich der oberen Grätenführung 15 eine Löseeinrichtung 20 angeordnet ist, die mindestens zum Anlösen der Grätenverbindung 21 zwischen Flankengräten 11 und Hauptgräte 13 von mindestens einigen der Flankengräten 11 ausgebildet und eingerichtet ist.

Die im Folgenden beschriebenen Merkmale und Weiterbildungen stellen für sich betrachtet oder in Kombination miteinander bevorzugte Ausführungsformen dar. Es wird ausdrücklich darauf hingewiesen, dass Merkmale, die in den Ansprüchen und/oder der Beschreibung und/oder der Zeichnung zusammengefasst oder in einer gemeinsamen Ausführungsform beschrieben sind, auch funktional eigenständig die weiter oben beschriebene Vorrichtung 10 weiterbilden können.

In der dargestellten, beispielhaften Ausführungsform ist die Löseeinrichtung 20 mindestens zum Anlösen der Grätenverbindung 21 zwischen Flankengräten 11 und Hauptgräte 13 mindestens von den in Richtung des Kopfbereichs, also am kopfseitigen Ende der Bauchhöhle des zu bearbeitenden Fisches 12, befindlichen Flankengräten 11 zu beiden Seiten der Hauptgräte 13 ausgebildet und eingerichtet. Dazu umfasst die Löseeinrichtung 20 mindestens zwei Löseelemente 22, 23, die auf einander gegenüberliegenden Seiten der oberen Grätenführung 15 positioniert bzw. angeordnet sind. Die obere Grätenführung 15 umfasst mindestens zwei Führungsbacken 24, 25, die beabstandet zueinander angeordnet sind, derart, dass deren freie, nach unten gerichteten Enden zum Führen der Hauptgräte 13 von der dorsalen Seite ausgebildet und eingerichtet sind, und die einander zugekehrten Innenseiten der Führungsbacken 24, 25 ausreichend Raum, den so genannten Führungsspalt, bilden, um den Durchtritt der dorsalen Speichen 42 zu gewährleisten. Von der ventralen Seite ist die Hauptgräte 13 einerseits durch den Transportsattel 14 geführt, und andererseits, nämlich insbesondere im Bereich von der Bauchhöhle bis zum Schwanzende, durch die untere Grätenführung 16.

Jedes Löseelement 22, 23 umfasst einen Löseabschnitt 26, 27 und einen Leitabschnitt 28, 29. In der dargestellten Ausführungsform ist der Löseabschnitt 26, 27 dem Leitabschnitt 28, 29 entgegen der Transportrichtung T der zu bearbeitenden Fische 12 vorauslaufend angeordnet, derart, dass die anzulösenden Flankengräten 11 erst auf den Löseabschnitt 26, 27 mindestens zum Anlösen der Flankengräten 11 von der Hauptgräte 13 und nachfolgend auf den Leitabschnitt 28, 29 zum Leiten der mindestens angelösten Flankengräten 11 in einen zwischen Trennmittel 18 und Gegenlage 19 des Trennaggregats 17 bestehenden Schneidspalt 39 treffen. Die Ausbildung der Löseabschnitte 26, 27 sowie der Leitabschnitte 28, 29 kann variieren, ebenso wie die Anordnung und Zuordnung von Löseabschnitt 26, 27 zu jeweils zugehörigem Leitabschnitt 28, 29.

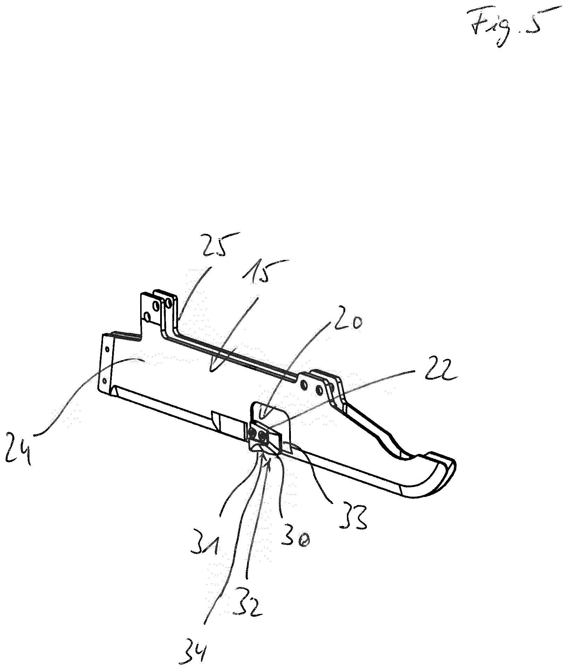

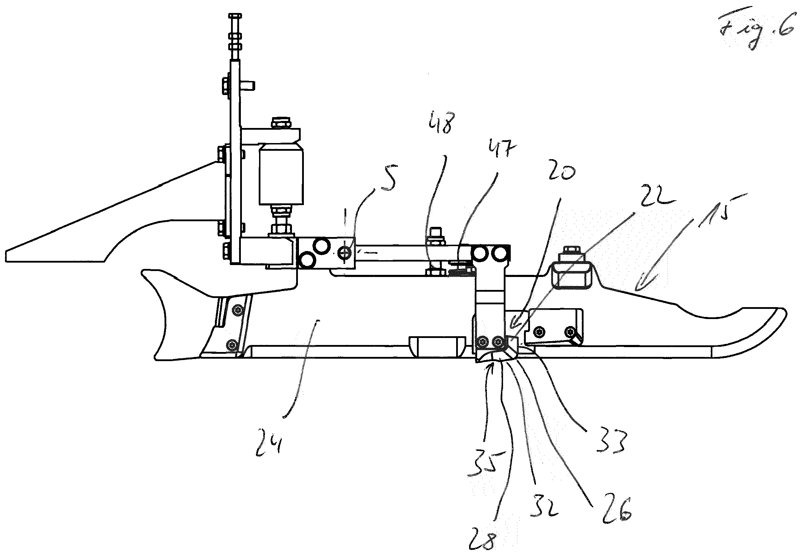

Jeder Löseabschnitt 26, 27 ist mindestens an der den Flankengräten 11 zugewandten Lösekante 30 mindestens abschnittsweise scharfkantig ausgebildet, während jeder Leitabschnitt 28, 29 zur Bildung einer Leitkante 31 mindestens abschnittsweise stumpf ausgebildet ist. In der beispielhaften Ausführungsform gemäß Figuren 5 und 6 erstreckt sich die scharfkantige Lösekante 30 sogar von einer den Flankengräten 11 zugewandten Unterkante 32 bis in den Bereich einer der Transportrichtung T der zu bearbeitenden Fische 12 entgegenweisenden Frontkante 33. Scharfkantig kann bedeuten, dass die Lösekante 30 tatsächlich messerscharf ist. In anderen Ausführungsformen reicht es aus, wenn die Lösekante 30 mit aufeinander zu laufenden Flanken versehen ist, derart, dass das (An-)Brechen der Flankengräten 11 sichergestellt ist.

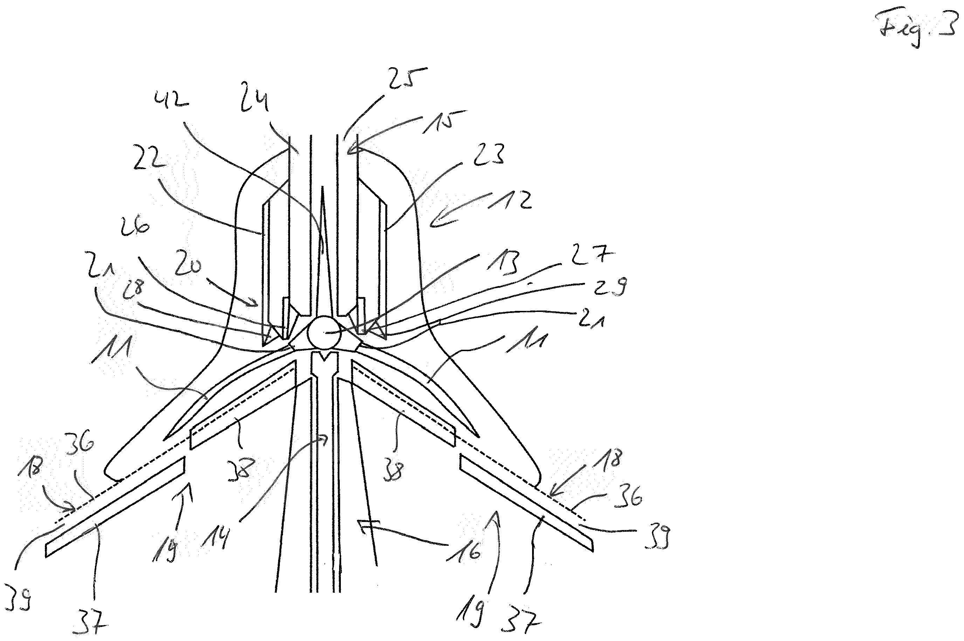

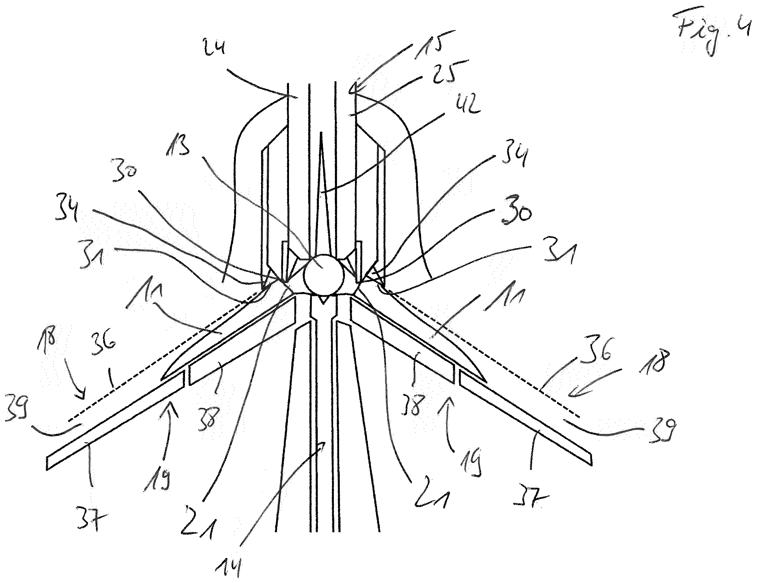

Die Ausbildung der stumpfen Leitkante 31 und deren An- bzw. Zuordnung zur Lösekante 30 kann ebenfalls variieren. In der dargestellten Ausführungsform erstreckt sich die stumpfe Leitkante 31 in Verlängerung der scharfkantigen Lösekante 30 auf der den Flankengräten 11 zugewandten Unterkante 32, wobei die stumpfe Leitkante 31 zusätzlich eine Erstreckung quer zur Transportrichtung T zur Bildung einer Leitfase 34 aufweist. Die Leitfase 34 ist eine abgestumpfte und angeschrägte Kante, die dazu ausgebildet und eingerichtet ist, die zuvor von der Lösekante 30 zumindest angelösten Flankengräten 11 in die gewünschte Position zu drücken. Als gewünschte Position ist eine solche bezeichnet/definiert, in der die Flankengräten 11 durch die Leitfase 34 aus ihrer ursprünglich gebogenen Ausrichtung (siehe insbesondere Figur 3) in die gedrehte und abgeflachte, im Wesentlichen lineare Ausrichtung (siehe insbesondere Figur 4) gebracht werden und dort liegen, um durch den Schneidspalt 39 zwischen Trennmittel 18 und Gegenlage 19 geführt zu werden. Mittels der Leitfase 34, die quer zur Transportrichtung T ausgehend von der Lösekante 30 abfallend geneigt ist, werden die Flankengräten 11 gegen die Gegenlage 19 gedrückt, bis sie im Wesentlichen in der durch die Gegenlage 19 aufgespannten Ebene und unterhalb des Trennmittels 18, also im Schneidspalt 39, liegen.

Lösekante 30 und Leitkante 31 gehen in Transportrichtung T quasi ineinander über. In der bevorzugten Ausführungsform gemäß Zeichnung ist die aus der Lösekante 30 und der Leitkante 31 gebildete Unterkante 32 jedes Löseelementes 22, 23 in Transportrichtung T der zu bearbeitenden Fische 12 abfallend ausgebildet. Bevorzugt liegen die Flankengräten 11 während des Transports jedoch nicht durchgängig an der Unterkante 32 an, da die Leitkante 31 gegenüber der Lösekante 30 vertikal zur Transportrichtung T versetzt ausgebildet ist. Anders ausgedrückt macht die Unterkante 32 im Übergang von der Lösekante 30 zur Leitkante 31 einen Rücksprung 35. Zunächst wird der Druck der Unterkante 32 auf die Flankengräten 11 durch die in Transportrichtung T abfallende Lösekante 30 kontinuierlich erhöht, bis die Flankengräten 11 mindestens teilweise angebrochen sind. Dann wird durch den Rücksprung 35 in der Unterkante 32 zunächst der maximale Druck von den Flankengräten 11 genommen und durch die Leitkante 31, die ebenfalls in Transportrichtung T abfallend ausgebildet ist und quer zur Transportrichtung T schräg nach unten geneigt ausgebildet ist, einerseits wieder erhöht und andererseits werden die Flankengräten 11 durch die Leitfase 34 seitlich "umgelegt", damit sie flach und linear durch den Schneidspalt geführt werden können.

Die Löseelemente 22, 23 können mehrteilig ausgebildet sein. Vorzugsweise sind die Löseelemente 22, 23 jedoch einstückig ausgebildet. Die Dicke der Löseelemente 22, 23, also insbesondere deren Ausdehnung quer zur Transportrichtung T, ist einerseits so gewählt, dass der Effekt des Anlösens/Anbrechens sichergestellt ist, und andererseits so gewählt, dass der zu bearbeitende Fisch 12, dessen Fischfilets beim Erreichen der Vorrichtung 10 durch Rückenschnitt und Bauschnitt schon teilweise vom Grätengerüst getrennt sind, durch die Löseelemente 22, 23 nicht beschädigt wird. Optional sind die Löseelemente 22, 23 jeweils mit der oberen Grätenführung 15 verbunden. Besonders bevorzugt sind die Löseelemente 22, 23 auf der jeweils vom Führungsspalt der oberen Grätenführung 15 abgewandten Seite fest an dieser angebracht, siehe hierzu insbesondere Figur 5. Konkret sind die Löseelemente 22, 23 fest an den einander abgekehrten Außenseiten der die obere Grätenführung 15 bildenden Führungsbacken 24, 25 befestigt. Die Befestigung kann lösbar ausgebildet sein. Optional sind die Löseelemente 22, 23 einstückig mit den Führungsbacken 24, 25 ausgebildet.

In nicht gezeigten Ausführungselementen können in Transportrichtung T auch mehrere Löseelemente 22, 23 hintereinander auf einer Seite oder beiden Seiten der oberen Grätenführung 15 vorgesehen sein. Es besteht auch die Möglichkeit, dass die Löseelemente 22, 23 an einem Handhabungsgerät, beispielsweise einem Mehrachsroboterarm oder dergleichen, angeordnet sind, dessen Funktion mit der Steuerung des Trennaggregats 17 abgestimmt ist. Andere Ausführungsformen von separat zur oberen Grätenführung 15 angeordneten und ausgebildeten Löseelementen 22, 23, die ortsfest oder bewegbar sind, können ebenso eingesetzt werden. In der Figur 6 ist eine beispielhafte Ausführungsform dargestellt, bei der die Löseeinrichtung 20 relativ zur oberen Grätenführung 15 bewegbar ausgebildet ist. Dazu ist die Löseeinrichtung 20 um einen Schwenkpunkt S relativ zu den Führungsbacken 24, 25 der oberen Grätenführung 15 schwenkbar. Mittels einer Feder 47 oder einem aktiven Element, wie z.B. einem Pneumatikzylinder oder dergleichen, ist die Löseeinrichtung 20 in einer unteren Ausgangsposition gehalten. Ein Anschlag 48 begrenzt die Bewegung nach unten auf die Flankengräten 11 zu. Optional kann die Löseeinrichtung 20 bzw. können deren Löseelemente 22, 23 mit einer Steuerung zusammenwirken, mittels der die Löseelemente 22, 23 insbesondere für den Fall, dass die Löseelemente z.B. mittels eines Pneumatikzylinders betätigbar sind, aus einer Ausgangsposition in eine Arbeitsposition und zurück bewegbar sind. An die Steuerung können auch Mittel zum Detektieren fischspezifischer Daten und Informationen angeschlossen sein, ebenso wie z.B. auch die Fördermittel zum Transport der zu bearbeitenden Fische 12 durch die Vorrichtung 10, damit eine individuelle oder synchronisierte Steuerung der Löseelemente 22, 23 gewährleistet ist.

Zum besseren Verständnis der erfindungsgemäßen Vorrichtung 10 wird eine beispielhafte Ausbildung der Vorrichtung 10 insbesondere bezüglich der Ausbildung des Trennaggregats 17 beschrieben, wobei ausdrücklich darauf hingewiesen wird, dass es sich nur um eine beispielhafte Option handelt und das Trennaggregat 17 auch eine andere Ausführung aufweisen kann. Mittels der Grätenführungen 15, 16 wird der zu bearbeitende Fisch 12, der üblicherweise auf dem Transportsattel 14 in den Bereich des Trennaggregats 17 transportiert wird, in einer definierten Position gehalten, derart, dass der Fisch 12 in Bezug auf das Trennaggregat 17 in einer definierten Lage liegt. Das Trennaggregat 17 weist das Trennmittel 18 auf, dem die korrespondierende Gegenlage 19 zugeordnet ist.

Das Trennmittel 18 der Vorrichtung 10 kann z.B. als rotierendes Kreismesser 36 ausgebildet und mittels eines nicht explizit dargestellten Antriebs mit variabler Drehzahl rotierend antreibbar sein. Die Gegenlage 19 ist vorzugsweise zweiteilig ausgebildet, und zwar mit einem festen Stützelement 37, das zusammen mit dem Kreismesser 36 aus der Warteposition in die Arbeitsposition und zurück bewegbar ausgebildet und angeordnet ist, und mit einem separat und relativ zum festen Stützelement 37 bewegbar ausgebildeten variablen, nämlich insbesondere gegen eine Federkraft ausweichbaren Stützelement 38. Das gesamte Trennaggregat 17 befindet sich grundsätzlich in einer Warteposition. Das feste Stützelement 37 weist einen definierten Spaltabstand zum Kreismesser 36 auf, der in der Größe dem Schneidspalt 39 entspricht. Beispielsweise kann die Größe des Spaltabstandes 0,5 bis 1mm, aber auch 2mm oder mehr betragen.

Das ausweichbare Stützelement 38 ist in der Warteposition geringfügig höher positioniert als das feste Stützelement 37. Mit anderen Worten spannen die Stützelemente 37, 38 in der Warteposition unterschiedliche Ebenen auf, die parallel versetzt sind, bilden also keine gemeinsame Ebene aus. Das ausweichbare Stützelement 38 erstreckt sich entgegen der Transportrichtung T weiter als das feste Stützelement 37, so dass die Flankengräten 11 beim Einlaufen des zu bearbeitenden Fisches 12 zunächst auf das ausweichbare Stützelement 38 auflaufen und ggf. quasi oben auf dem ausweichbaren Stützelement 38 aufliegen. Sobald die in Transportrichtung T vorauslaufende erste Flankengräte 11 den Wirkbereich des Kreismessers 36 erreicht, wird das Trennaggregat 17 aus der Warteposition nach oben in die Arbeitsposition bewegt. Dabei werden zunächst das Kreismesser 36 und das dem Kreismesser 36 zugeordnete feste Stützelement 37 zusammen nach oben bewegt, ohne dass sich der konstante aber einstellbare Spaltabstand verändert. Sobald sich das feste Stützelement 37 auf einer Höhe mit dem ausweichbaren Stützelement 38 befindet, die beiden Stützelemente 37, 38 also eine gemeinsame ebene Oberfläche und eine gemeinsame Ebene bilden, die parallel zur vom Kreismesser 36 aufgespannten Ebene verläuft, führt eine Weiterbewegung von Kreismesser 36 und festem Stützelement 37 nach oben in die endgültige Arbeitsposition dazu, dass das ausweichbare Stützelement 38 quasi mitgenommen wird, z.B. über mechanische Mitnehmer oder optional auch aktiv gesteuert. In der endgültigen Arbeitsposition ist dann der Schneidspalt 39 gebildet, und zwar zwischen der Unterseite des Kreismessers 36 und der gemeinsamen Oberfläche der beiden Stützabschnitte 37, 38. Die Bewegungen von Kreismesser 36 und Stützabschnitten 37, 38 können z.B. linear ausgeführt sein. Bevorzugt sind jedoch Schwenkbewegungen mittels geeigneter Antriebsmittel.

Durch die beispielshaft beschriebene Anordnung und Ausbildung des Trennaggregats 17 liegen die Flankengräten 11 beim Einlaufen in den Bereich der Vorrichtung 10 auf den ausweichbaren Stützelementen 38 auf, während die Bauchlappen der bereits teilweise freigeschnittenen Fischfilets sich bis in den Bereich der festen Stützelemente 37 erstrecken. Die Löseelemente 22, 23 der Löseeinrichtung 20 wirken demnach mit den ausweichbaren Stützelementen 38 zusammen. Die Flankengräten 11 liegen auf der Oberfläche des Stützelementes 38 auf bzw. werden durch das Mitanheben des Stützelementes 38 in Kontakt mit diesem gebracht und werden von oben durch die Löseabschnitte 26, 27 mit - punktuellem - Druck beaufschlagt, bis sie (an-)brechen und dann von den Leitabschnitten 28, 29 so gedreht werden, dass sie flach auf der Oberfläche des ausweichbaren Stützelementes 38 liegen. Für den Fall, dass der Anpressdruck durch die Löseelemente 22, 23 auf die Flankengräten 11 zu hoch werden sollte, kann der Anpressdruck durch die federbelastete Anordnung/Aufhängung des ausweichbaren Stützelementes 38 ausgeglichen bzw. begrenzt werden. In optionalen Ausführungsformen kann auch ein (nicht gezeigtes) Betätigungsmittel vorgesehen sein, das zum aktiven Wegsteuern des ausweichbaren Stützelementes 38 ausgebildet und eingerichtet ist. Mit anderen Worten kann der Druck auf die Flankengräten 11 durch aktives Ansteuern des ausweichbar positionierten Stützelementes 38 mittels des Betätigungsmittels gesteuert und kontrolliert eingestellt werden.

Die Vorrichtung 10 kann als Einzelvorrichtung ausgebildet sein. Für diesen Fall umfasst die Vorrichtung 10 selbst dann Fördermittel mit mindestens einem Transportsattel 14. Die zuvor beschriebene Vorrichtung 10 ist jedoch besonders bevorzugt Bestandteil einer Filetiermaschine 40. Die Filetiermaschine 40 zum Filetieren geköpfter, geschlachteter und vorzugsweise in ihrer Bauchhöhle geöffneter Fische 12 umfasst Rückenmesser 41 zum Freilegen von dorsalen Speichen 42 bis an die Hauptgräte 13 heran, Bauchmesser 43 zum Freilegen von sich vom Schwanz bis zur Bauchhöhle erstreckenden ventralen Speichen 44 bis an die Hauptgräte 13 heran, eine Vorrichtung 10 zum Freischneiden von Flankengräten 11, Trennmesser 45 zum Trennen der Filets im Schwanzbereich von der Hauptgräte 13 unter Durchschneiden des von Bauch- und Rückenmessern 41, 43 um die Hauptgräte 13 belassenen Steges, einen endlosen Förderer 46 zum Transport der Fische 12 Schwanz voraus sowie eine Anzahl auf dem Förderer 46 angeordneter Transportsattel 14 zur sicheren Aufnahme der Fische 12 in ihrer Bauchhöhle. Diese Filetiermaschine 40 ist erfindungsgemäß dadurch gekennzeichnet, dass die Vorrichtung 10 zum Freischneiden der Flankengräten 11 nach einem oder mehreren der Ansprüche 1 bis 13 ausgebildet ist.

Für den Fall, dass Fische 12 mit noch nicht geöffneter Bauchhöhle verarbeitet werden, dienen die Bauchmesser 43 zusätzlich zum Öffnen der Bauchhöhle.

Im Folgenden wird das Verfahrensprinzip insbesondere anhand der Zeichnung näher erläutert:
Der zu bearbeitende Fisch 12 wird vor dem Aufsetzen auf den Transportsattel 14 geköpft und geschlachtet, so dass der 12 Fisch vorzugsweise auch in der Bauchhöhle geöffnet ist. Dann wird der "kopflose" Fisch auf den Transportsattel 14 geschoben, bis eine Anschlagfläche des Transportsattels 14 gegen das Ende der Bauchhöhle trifft. Der so positionierte Fisch 12 wird vorzugsweise Schwanz voraus durch eine Filetiermaschine 40 transportiert. Dabei werden vorzugsweise nacheinander die dorsalen Speichen 42 bis an die Hauptgräte 13 heran, die ventralen Speichen 44 bis an die Hauptgräte 13 heran und die Flankengräten 11 freigeschnitten, um anschließend die Filets im Schwanzbereich von der Hauptgräte 13 zu trennen, indem der beim Freischneiden der dorsalen und ventralen Speichen 42, 44 um die Hauptgräte 13 herum belassene Steg durchtrennt wird.

Erfindungsgemäß werden die Flankengräten 11 vor dem Freischneiden mindestens teilweise im Bereich ihrer Grätenverbindung 21 zur Hauptgräte 13 mindestens angelöst. Mindestens werden die sich in Richtung des Kopfbereiches befindlichen Flankengräten 11 zu beiden Seiten der Hauptgräte 13 angelöst, vorzugsweise mindestens angebrochen. Mit anderen Worten wird die feste und starre Verbindung der Flankengräten 11 zur Hauptgräte 13 gelockert bzw. ganz getrennt, so dass die Flankengräten 11 aus ihrer Bogenstruktur heraus in eine flache Position/Ausrichtung gedreht werden können, bevor der zu bearbeitende Fisch 12 mit seinen Flankengräten 11 einen Schneidspalt 39 eines Trennaggregats 17 zum Freischneiden der Flankengräten 11 erreicht.

Zum Anlösen der Grätenverbindung 21 zwischen Flankengräten 11 und Hauptgräte 13 wird eine vorzugsweise punktuelle Last aufgebracht, um die feste Verbindung zu trennen. Vorzugsweise nimmt die punktuelle Last auf die Grätenverbindung 21 mit Transport der zu bearbeitenden Fische 12 in Transportrichtung T zu. Nach dem Anlösen/Anbrechen/Durchbrechen werden die mindestens angelösten Flankengräten 11 gedreht und in einen zwischen einem Trennmittel 18 und einer Gegenlage 19 eines Trennaggregats 17 zum Freischneiden der Flankengräten 11 gebildeten Schneidspalt 39 geleitet.

Das Anlösen oder Anbrechen bzw. vollständige Brechen der Flankengräten 11 mit dem anschließenden Zuführen der flachgedrückten Flankengräten 11 in den Schneidspalt 39 kann auf unterschiedliche Weise erfolgen. Besonders bevorzugt wird das Verfahren jedoch mit einer Filetiermaschine 40 nach Anspruch 14 ausgeführt.

## Patentansprüche

1. Vorrichtung (10), ausgebildet und eingerichtet zum Freischneiden von Flankengräten (11) von geköpften, geschlachteten und vorzugsweise in ihrer Bauchhöhle geöffneten Fischen (12), die mit ihrer Hauptgräte (13) auf Transportsätteln (14) aufliegend Schwanz voraus in Transportrichtung T transportiert werden, mindestens umfassend eine obere Grätenführung (15), die zum Führen der Hauptgräte (13) von der dorsalen Seite des zu bearbeitenden Fisches (12) ausgebildet und eingerichtet ist, eine untere Grätenführung (16), die zum Führen von im Bereich vom Schwanz bis zur Bauchhöhle ausgebildeten, ventralen Speichen (44) des zu bearbeitenden Fisches (12) ausgebildet und eingerichtet ist, sowie ein Trennaggregat (17) zum Lösen von Fischfilets von den die Bauchhöhle des zu bearbeitenden Fisches (12) umgebenden Flankengräten (11), wobei das Trennaggregat (17) ein Trennmittel (18) mit korrespondierender Gegenlage (19) umfasst und aus einer Warteposition in eine Arbeitsposition und umgekehrt bringbar ist, **dadurch gekennzeichnet, dass** im Bereich der oberen Grätenführung (15) eine Löseeinrichtung (20) angeordnet ist, die mindestens zum Anlösen der Grätenverbindung (21) zwischen Flankengräten (11) und Hauptgräte (13) von mindestens einigen der Flankengräten (11) ausgebildet und eingerichtet ist.

2. Vorrichtung (10) nach Anspruch 1, **dadurch gekennzeichnet, dass** die Löseeinrichtung (20) mindestens zum Anlösen der Grätenverbindung (21) zwischen Flankengräten (11) und Hauptgräte (13) mindestens von den in Richtung des Kopfbereichs, also am kopfseitigen Ende der Bauchhöhle des zu bearbeitenden Fisches (12), befindlichen Flankengräten (11) zu beiden Seiten der Hauptgräte (13) ausgebildet und eingerichtet ist.

3. Vorrichtung (10) nach Anspruch 1 oder 2, **dadurch gekennzeichnet, dass** die Löseeinrichtung (20) mindestens zwei Löseelemente (22, 23) umfasst, die auf einander gegenüberliegenden Seiten der oberen Grätenführung (15) positioniert bzw. angeordnet sind.

4. Vorrichtung (10) nach Anspruch 3, **dadurch gekennzeichnet, dass** jedes Löseelement (22, 23) einen Löseabschnitt (26, 27) und einen Leitabschnitt (28, 29) umfasst.

5. Vorrichtung (10) nach Anspruch 3 oder 4, **dadurch gekennzeichnet, dass** der Löseabschnitt (26, 27) dem Leitabschnitt (28, 29) entgegen der Transportrichtung T der zu bearbeitenden Fische (12) vorauslaufend angeordnet ist, derart, dass die anzulösenden Flankengräten (11) erst auf den Löseabschnitt (26, 27) mindestens zum Anlösen der Flankengräten (11) von der Hauptgräte (13) und nachfolgend auf den Leitabschnitt (28, 29) zum Leiten der mindestens angelösten Flankengräten (11) in einen zwischen Trennmittel (18) und Gegenlage (19) des Trennaggregats (17) bestehenden Schneidspalt (39) treffen.

6. Vorrichtung (10) nach Anspruch 4 oder 5, **dadurch gekennzeichnet, dass** der Löseabschnitt (26, 27) mindestens an einer den Flankengräten (11) zugewandten Lösekante (30) mindestens abschnittsweise scharfkantig ausgebildet ist, während der Leitabschnitt (28, 29) zur Bildung einer Leitkante (31) mindestens abschnittsweise stumpf ausgebildet ist.

7. Vorrichtung (10) nach Anspruch 6, **dadurch gekennzeichnet, dass** sich die scharfkantige Lösekante (30) von einer den Flankengräten (11) zugewandten Unterkante (32) bis in den Bereich einer der Transportrichtung T der zu bearbeitenden Fische (12) entgegenweisenden Frontkante (33) erstreckt.

8. Vorrichtung (10) nach Anspruch 5 oder 6, **dadurch gekennzeichnet, dass** sich die stumpfe Leitkante (31) in Verlängerung der scharfkantigen Lösekante (30) auf der den Flankengräten (11) zugewandten Unterkante (32) erstreckt, wobei die stumpfe Leitkante (31) zusätzlich eine Erstreckung quer zur Transportrichtung T zur Bildung einer Leitfase (34) aufweist.

9. Vorrichtung (10) nach einem oder mehreren der Ansprüche 6 bis 8, **dadurch gekennzeichnet, dass** die aus der Lösekante (30) und der Leitkante (31) gebildete Unterkante (32) jedes Löseelementes (22, 23) in Transportrichtung T der zu bearbeitenden Fische (12) abfallend ausgebildet ist.

10. Vorrichtung (10) nach einem oder mehreren der Ansprüche 3 bis 9, **dadurch gekennzeichnet, dass** jedes Löseelement (22, 23) wahlweise einstückig oder mehrteilig ausgebildet ist.

11. Vorrichtung (10) nach einem oder mehreren der Ansprüche 3 bis 10, **dadurch gekennzeichnet, dass** die Löseelemente (22, 23) jeweils mit der oberen Grätenführung (15) verbunden sind.

12. Vorrichtung (10) nach einem oder mehreren der Ansprüche 3 bis 11, **dadurch gekennzeichnet, dass** die Löseelemente (22, 23) auf der jeweils vom Führungsspalt der oberen Grätenführung (15) abgewandten Seite fest an dieser angebracht sind.

13. Vorrichtung (10) nach Anspruch 12, **dadurch gekennzeichnet, dass** die Anbringung der Löseelemente (22, 23) an der oberen Grätenführung (15) lösbar ausgebildet ist.

14. Filetiermaschine (40) zum Filetieren geköpfter, geschlachteter und vorzugsweise in ihrer Bauchhöhle geöffneter Fische (12), umfassend Rückenmesser (41) zum Freilegen von dorsalen Speichen (42) bis an die Hauptgräte (13) heran, Bauchmesser (43) zum Freilegen von sich vom Schwanz bis zur Bauchhöhle erstreckenden ventralen Speichen (44) bis an die Hauptgräte (13) heran, eine Vorrichtung (10) zum Freischneiden von Flankengräten (11), Trennmesser (45) zum Trennen der Filets im Schwanzbereich von der Hauptgräte (13) unter Durchschneiden des von Bauch- und Rückenmessern (43, 41) um die Hauptgräte (13) belassenen Steges, einen endlosen Förderer (46) zum Transport der Fische (12) Schwanz voraus sowie eine Anzahl auf dem Förderer (46) angeordneter Transportsättel (14) zur sicheren Aufnahme der Fische (12) in ihrer Bauchhöhle, **dadurch gekennzeichnet, dass** die Vorrichtung (10) zum Freischneiden der Flankengräten (11) nach einem oder mehreren der Ansprüche 1 bis 13 ausgebildet ist.

15. Verfahren zum Filetieren geköpfter, geschlachteter und vorzugsweise in ihrer Bauchhöhle geöffneter Fische (12), umfassend die Schritte:
- Transportieren der zu bearbeitenden Fische (12) Schwanz voraus in Transportrichtung T durch eine Filetiermaschine (40),
- Freischneiden der dorsalen Speichen (42) bis an die Hauptgräte (13) heran,
- Freischneiden der ventralen Speichen (44) bis an die Hauptgräte (13) heran,
- Freischneiden der Flankengräten (11), und
- Trennen der Filets im Schwanzbereich von der Hauptgräte (13), indem der beim Freischneiden der dorsalen und ventralen Speichen (42, 44) um die Hauptgräte (13) herum belassene Steg durchtrennt wird,
**dadurch gekennzeichnet, dass** die Flankengräten (11) vordem Freischneiden mindestens teilweise im Bereich ihrer Grätenverbindung (21) zur Hauptgräte (13) mindestens angelöst werden.

16. Verfahren nach Anspruch 15, **dadurch gekennzeichnet, dass** mindestens die sich in Richtung des Kopfbereiches befindlichen Flankengräten (11) zu beiden Seiten der Hauptgräte (13) angelöst, vorzugsweise mindestens angebrochen werden.

17. Verfahren nach Anspruch 15 oder 16, **dadurch gekennzeichnet, dass** mindestens zum Anlösen der Grätenverbindung (21) zwischen Flankengräten (11) und Hauptgräte (13) eine vorzugsweise punktuelle Last aufgebracht wird, um die feste Verbindung zu trennen.

18. Verfahren nach einem oder mehreren der Ansprüche 15 bis 17, **dadurch gekennzeichnet, dass** die punktuelle Last auf die Grätenverbindung (21) mit Transport der zu bearbeitenden Fische (12) in Transportrichtung T zunimmt.

19. Verfahren nach einem oder mehreren der Ansprüche 15 bis 18, **dadurch gekennzeichnet, dass** die mindestens angelösten Flankengräten (11) gedreht und in einen zwischen einem Trennmittel (18) und einer Gegenlage (19) eines Trennaggregats (17) zum Freischneiden der Flankengräten (11) gebildeten Schneidspalt (39) geleitet werden.

20. Verfahren nach einem oder mehreren der Ansprüche 15 bis 19, **dadurch gekennzeichnet, dass** es mit einer Filetiermaschine (40) nach Anspruch 14 ausgeführt wird.
